# EUROPEAN PATENT APPLICATION

(11) **EP 0 544 217 A1**
(43) Date of publication of application: **02.06.1993**
(21) Application number: 92119961.8
(22) Date of filing: 24.11.1992
(51) Int. Cl.: H04J 3/16, H04L 12/64

(54) **Processing of time division multiplexed signal into ATM cells to decrease building time of each cell**

(30) Priority: 25.11.1991 JP 309397/91
(71) Applicant: NEC CORPORATION, Tokyo (JP)
(72) Inventor: Yamamura, Yoshihiro, c/o NEC Corporation, Minato-ku, Tokyo (JP)
(74) Representative: VOSSIUS & PARTNER

(57) **Abstract**

In a device for processing a time division multiplexed signal into asynchronous transfer mode cells, each comprising an information field, a single building unit (23) successively builds first through M-th cells (M: a plural and natural number) as the asynchronous transfer mode cells so that the information field of an m-th cell of the first through the M-th cells comprises first through N-th PCM signals (N: another plural and natural number) of an m-th frame of first through M-th frames of the time division multiplexed signal, where m consecutively varies from 1 to M. The first through the N-th PCM signals of the m-th frame are successively extracted from the time division multiplexed signal by an extracting unit (21). When the information field of each of the first through the M-th cells comprises first through N-th bytes and a prescribed number of remaining bytes, the building unit successively builds the first through the M-th cells so that the first through the N-th extracted signals of the m-th frame are placed in the first through the N-th bytes of the m-th cell, respectively, and that empty bytes are placed in the remaining bytes of the m-th cell.

## Description

This invention relates to a method of processing a time division multiplexed signal into asynchronous transfer mode (ATM) cells. This invention relates also to a processing device for use in carrying out the method.

The time division multiplexed signal comprises first through M-th frames, each of which comprises first through N-th pulse code modulated (PCM) signals, where M represents a first plural and natural number, N representing a second plural and natural number. The first through the N-th pulse code modulated signals of each frame of the time division multiplexed signal are derived from first through N-th channels, respectively.

Each of the asynchronous transfer mode cells comprises an information field.

As will later be described, a conventional processing device periodically extracts n-th pulse code modulated signals of the first through the M-th frames from the time division multiplexed signal as n-th extracted signals of the first through the M-th frames, where n is variable between 1 and N, both inclusive. Thereafter, the conventional device successively builds first through N-th cells as the asynchronous transfer mode cells so that the information field of on n-th cell of the first through the N-th cells comprises the n-th extracted signals of the first through the M-th frames.

Inasmuch as the n-th extracted signals of all of the first through the M-th frames should be included in the information field of the n-th cell, a building time of each cell is inevitably increased as the number M of the frames is increased.

It is therefore an object of this invention to provide a method for processing a time division multiplexed signal into asynchronous transfer mode cells, which method can decrease a building time of each of the asynchronous transfer mode cells.

It is another object of this invention to provide a method of the type described, which method can process the time division multiplexed signal into the asynchronous transfer mode cells at a high speed.

It is a specific object of this invention to provide a processing device for processing a time division multiplexed signal into asynchronous transfer mode cells, which device can decrease a building time of each of the asynchronous transfer mode cells.

It is a further object of this invention to provide a processing device of the type described, which device can process the time division multiplexed signal into the synchronous transfer mode cells at a high speed.

It is a still further object of this invention to provide a processing device of the type described, which device is compact and inexpensive.

Other objects of this invention will become clear as the description proceeds.

On describing the gist of an aspect of this invention, it is possible to understand that a method is for processing a time division multiplexed signal into asynchronous transfer mode cells, each comprising an information field. The time division multiplexed signal comprises first through M-th frames, each comprising first through N-th pulse code modulated signals, where M represents a first predetermined plural and natural number, N representing a second predetermined plural and natural number.

According to the aspect of this invention, the above-understood method comprises the steps of: successively extracting the first through the N-th pulse code modulated signals of an m-th frame from the time division multiplexed signal as first through N-th extracted signals of the m-th frame, where m consecutively varies from 1 to M; and successively building first through M-th cells as the asynchronous transfer mode cells so that the information field of an m-th cell of the first through the M-th cells comprises the first through the N-th extracted signals of the m-th frame.

On describing the gist of another aspect of this invention, it is possible to understand that a method is for processing a time division multiplexed signal into asynchronous transfer mode cells, each comprising an information field. The time division multiplexed signal comprises first through J-th multiframes, where J represents a predetermined plural and natural number. Each multiframe comprises a predetermined plural number K of frames. Each of the frames comprises first through N-th pulse code modulated signals, where N represents another predetermined plural and natural number.

According to this aspect of this invention, the above-understood method comprises the steps of: successively extracting the first through the N-th pulse code modulated signals of the frames of a j-th multiframe from the time division multiplexed signal as first through N-th extracted signals of the frames of the j-th multiframe, where j consecutively varies from 1 to J; and successively building first through J-th cells as the asynchronous transfer node cells so that the information field of a j-th cell of the first through the J-th cells comprises the first through the N-th extracted signals of the frames of the j-th multiframe.

On describing the gist of a specific aspect of this invention, it is possible to understand that a device is for processing a time division multiplexed signal into asynchronous transfer mode cells, each comprising an information field. The time division multiplexed signal comprises first through M-th frames, each comprising first through N-th pulse code modulated signals, where M represents a first predetermined plural and natural number, N representing a second predetermined plural and natural number.

According to the specific aspect of this invention, the above-understood device comprises: an extracting unit for successively extracting the first through the N-th pulse code modulated signals of an m-th frame from the time division multiplexed signal as first through N-th extracted signals of the m-th frame, where m consecutively varies from 1 to M; and a building unit connected to the extracting unit for successively building first through M-th cells as the asynchronous transfer mode cells so that the information field of an m-th cell of the first through the M-th cells comprises the first through the N-th extracted signals of the m-th frame.

On describing the gist of a different aspect of this invention, it is possible to understand that a device is for processing a time division multiplexed signal into asynchronous transfer mode cells, each comprising an information field. The time division multiplexed signal comprises first through J-th multiframes, where J represents a predetermined plural and natural number. Each multiframe comprises a predetermined plural number K of frames. Each of said frames comprises first through N-th pulse code modulated signals, where N represents another predetermined plural and natural number.

According to the different aspect of this invention, the above-understood device comprises: an extracting unit for successively extracting the first through the N-th pulse code modulated signals of the frames of a j-th multiframe from said time division multiplexed signal as first through N-th extracted signals of the frames of said j-th multiframe, where j consecutively varies from 1 to J; and a building unit connected to said extracting unit for successively building first through J-th cells as said asynchronous transfer mode cells so that the information field of a j-th cell of said first through said J-th cells comprises said first through said N-th extracted signals of the frames of said j-th multiframe.

### Brief Description of the Drawing:

Fig. 1 is a block diagram of a processing device for use in carrying out a conventional method,
Fig. 2 is a time chart for use in describing a time division multiplexed signal which should be processed by the conventional method and by a method according to a first embodiment of this invention;
Fig. 3 is a diagram for use in describing a structure of an n-th cell produced in the conventional method;
Fig. 4 is a block diagram of a processing device for use in carrying out the method according to the first embodiment of this invention and a method according to a second embodiment of this invention;
Fig. 5 is a diagram for use in describing a structure of an m-th cell produced by the method according to the first embodiment of this invention;
Fig. 6 is a diagram for use in describing a structure of another m-th cell produced by the method according to the first embodiment of this invention;
Fig. 7 is a time chart for use in describing another time division multiplexed signal which should be processed by the method according to the second embodiment of this invention;
Fig. 8 is a diagram for use in describing a structure of a j-th cell produced by the method according to the second embodiment of this invention; and
Fig. 9 is a block diagram for use in describing details of the device illustrated in Fig. 4.

### Description of the Preferred Embodiments:

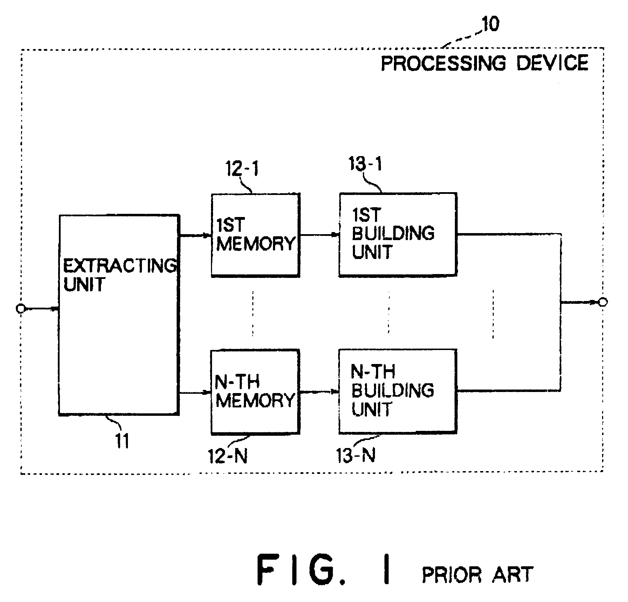

Referring to Fig. 1, a conventional processing device 10 will first be described for a better understanding of this invention. The processing device 10 is equivalent to the conventional processing device described in the preamble of the instant specification. The processing device 10 is for use in carrying out a conventional method of processing a time division multiplexed signal into asynchronous transfer mode (ATM) cells, each of which comprises an information field which will later be described.

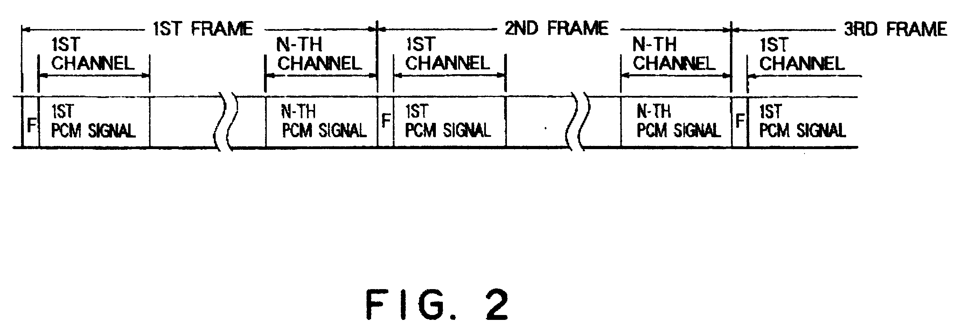

Turning to Fig. 2, the time division multiplexed signal comprises first through M-th frames, where M represents a first plural and natural number. Each of the first through the M-th frames comprises a frame synchronization or alignment signal which is labelled F and which indicates a leading bit or edge of each of the first through the M-th frames. Each of the first through the M-th frames further comprises first through N-th pulse code modulated (PCM) signals which succeed the frame synchronization signal F, where N represents a second plural and natural number.

Typically, the first through the N-th pulse code modulated signals of each frame of the time division multiplexed signal are derived from first through N-th speech channels for transmission of first through N-th speech signals, respectively. Each of the first through the N-th pulse code modulated signals of each frame of the time division multiplexed signal typically has a length of one byte or eight bits.

The time division multiplexed signal has a frame period which defines each of the first through the M-th frames of the time division multiplexed signal. For example, the frame period is equal to 125 microseconds when N is equal to 24 (that is, when the number N of the speech channels is equal to 24) and when the time division multiplexed signal has a bit rate of 1.544 Mbits/s.

Turning back to Fig. 1 with reference to Fig. 2 continued, the processing device 10 comprises an extracting unit 11. The extracting unit 11 periodically extracts the frame synchronization signals F of the first through the M-th frames from the time division multiplexed signal as extracted synchronization signals and periodically extracts, on the basis of the extracted synchronization signals, n-th pulse code modulated (PCM) signals of the first through the M-th frames from the time division multiplexed signal as n-th extracted signals of the first through the M-th frames, where n is variable between 1 and N, both inclusive. More specifically, the first pulse code modulates signals of the first through the M-th frames are extracted as first extracted signals of the first through the M-th frames. Likewise, the N-th pulse code modulated signals of the first through the M-th frames are extracted as N-th extracted signals of the first through the M-th frames.

First through N-th memories 12-1 to 12-N are connected to the extracting unit 11. An n-th memory of the first through the N-th memories 12-1 to 12-N memorizes the n-th extracted signals of the first through the M-th frames as n-th memorized signals of the first through the M-th frames. More specifically, the first memory 12-1 memorizes the first extracted signals of the first through the M-th frames as first memorized signals of the first through the M-th frames. Likewise, the N-th memory 12-N memorizes the N-th extracted signals of the first through the M-th frames as N-th memorized signals of the first through the M-th frames.

First through N-th building units 13-1 to 13-N are connected to the first through the N-th memories 12-1 to 12-N, respectively. A combination of the first through the N-th building units 13-1 to 13-N builds first through N-th cells as the asynchronous transfer mode cells so that the information field of an n-th cell of the first through the N-th cells comprises the n-th memorized signals of the first through the M-th frames.

More specifically, the first building unit 13-1 builds the first cell so that the information field of the first cell comprises the first memorized signals of the first through the M-th frames. Likewise, the N-th building unit 13-N builds the N-th cell so that the information field of the N-th cell comprises the N-th memorized signals of the first through the M-th frames. The first through the N-th cells are successively transferred as they are. Alternatively, the first through the N-th cells are transferred with the first through the N-th cells multiplexed by a cell multiplexing unit (not shown).

Thus, a combination of the building units 13-1 to 13-N builds the asynchronous transfer mode cells which are equal in number to N (that is, the number of the speech channels).

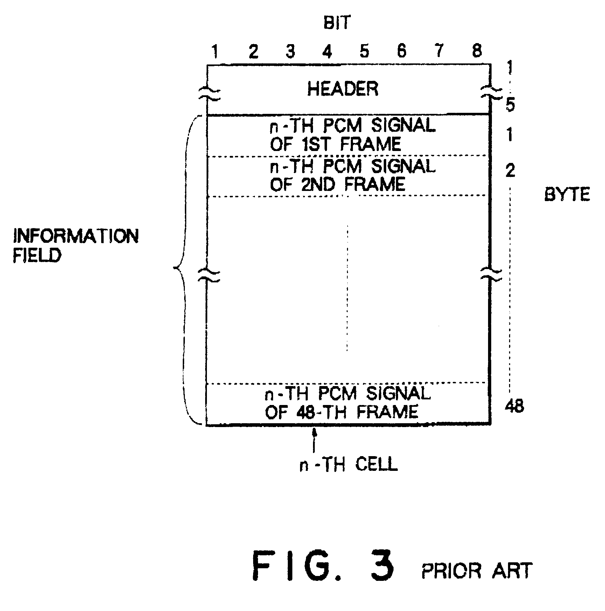

Turning to Fig. 3, the n-th cell of the first through the N-th cells is illustrated, which n-th cell is produced by the conventional method. The illustrated n-th cell comprises a header of five bytes and the information field comprising first through forty-eighth bytes. Each byte of the reader and the information field comprises first through eighth bits.

The n-th memorized signal (namely, the n-th pulse code modulated (PCM) signal) of the first frame is placed in the first byte of the information field of the n-th cell. The n-th memorized signal (that is, the n-th PCM signal) of a second frame is placed in the second byte of the information field of the n-th cell. Likewise, the n-th memorized signal (namely, the n-th PCM signal) of a forty-eighth frame is placed in the forty-eighth byte of the information field of the n-th cell when the number M of the frames is equal to 48.

Inasmuch as the n-th pulse code modulated signals of the first through the M-th frames are placed in the information field of the n-th cell in accordance with the conventional method, a building time of each cell is unavoidably increased as the number M of the frames is increased. When the frame period is equal to 125 microseconds and when the number M of the frames is equal to 48, at least 6 milliseconds (= 48 x 125 microseconds) are required as the building time of each cell.

Inasmuch as the conventional processing device 10 of Fig. 1 comprises the first through the N-th memories 12-1 to 12-N and the first through the N-th building units 13-1 to 13-N, the conventional processing device 10 is bulky and expensive.

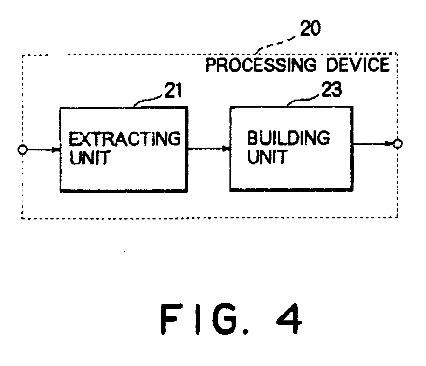

Turning to Fig. 4, description will proceed to a processing device 20 for use in carrying out a method according to a first embodiment of this invention. The method is for processing a time division multiplexed signal of Fig. 2 into asynchronous transfer mode (ATM) cells, each of which comprises an information field.

The processing device 20 comprises a different extracting unit 21. The extracting unit 21 extracts the frame synchronization signal F (Fig. 2) of an m-th frame from the time division multiplexed signal as extracted synchronization signal of the m-th frame and successively extracts, on the basis of the extracted synchronization signals, the first through the N-th pulse code modulated (PCM) signals of the m-th frame from the time division multiplexed signal as first through N-th extracted signals of the m-th frame, where m consecutively varies from 1 to M. More specifically, the first through the N-th pulse code modulated signals of the first frame are extracted as the first through the N-th extracted signals of the first frame. Likewise, the first through the N-th pulse code modulated signals of the M-th frame are extracted as the first through the N-th extracted signals of the M-th frame.

A single building unit 23 is connected to the extracting unit 21. The building unit 23 successively builds first through M-th cells as the asynchronous transfer mode cells so that the information field of an m-th cell of the first through the M-th cells comprises the first through the N-th extracted signals of the m-th frame. More specifically, the building unit 23 first builds the first cell so that the information field of the first cell comprises the first through the N-th extracted signals of the first frame. Likewise, the building unit 23 finally builds the M-th cell so that the information field of the M-th cell comprises the first through the N-th extracted signals of the M-th frame.

Thus, the building unit 23 builds the asynchronous transfer mode cells which are equal in number to M (that is, the number of the frames).

It is assumed that the information field of each of the first through the M-th cells comprises first through N-th bytes and a prescribed number Q of remaining bytes, where Q represents a natural number. In this event, the building unit 23 successively builds the first through the M-th cells so that the first through the N-th extracted signals of the m-th frame are placed in the first through the N-th bytes of the information field of the m-th cell, respectively, and that empty bytes are placed in the remaining bytes of the information field of the m-th cell.

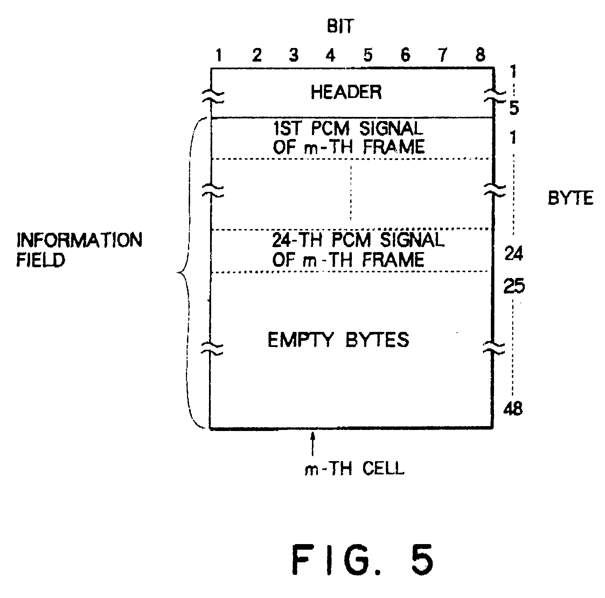

Turning to Fig. 5, the m-th cell of the first through the M-th cell is illustrated, which m-th cell is produced by the method according to the first embodiment of this invention when the number N of the speech channels is equal to 24. Like the n-th cell of Fig. 3, the illustrated m-th cell comprises a header of five bytes and the information field comprising first through forty-eighth bytes. In other words, the information field of the m-th sell comprises the first through the N-th (that is, twenty-fourth) bytes and a prescribed number Q of the remaining bytes which correspond to twenty-fifth through forty-eighth bytes. In the first through the N-th (twenty-fourth) bytes of the information field of the m-th cell, the first through the N-th (twenty-fourth) extracted signals (which are equivalent to the first through the N-th (twenty-fourth) pulse code modulated (PCM) signals) of the m-th frame are placed, respectively. The empty bytes are placed in the remaining bytes (the twenty-fifth through the forty-eighth bytes) of the information field of the m-th cell.

Inasmuch as the first through the N-th pulse code modulated signals of the m-th frame are placed in the information field of the m-th cell, a building time of each cell is decreased in comparison with the conventional method. When the frame period is equal to 125 microseconds, the building time of each cell is decreased down to at least 125 microseconds.

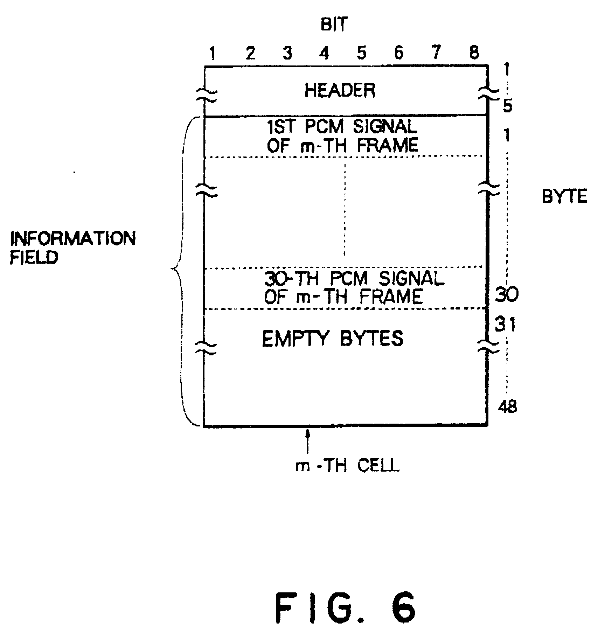

Turning to Fig. 6, another m-th cell is illustrated which is produced by the method according to the first embodiment of this invention when the number N. of the speech channels is equal to 30. In the first through the N-th (thirtieth) bytes of the information field of the m-th cell, the first through the N-th (thirtieth) extracted signals (which are equivalent to the first through the N-th (thirtieth) pulse code modulated (PCM) signals) of the m-th frame are placed, respectively. The empty bytes are placed in the remaining bytes (thirty-first through forty-eighth bytes) of the information field of the m-th cell.

Turning back to Fig. 4, description will proceed to a case where the processing device 20 carries out a method according to a second embodiment of this invention. The method is for processing another time division multiplexed signal into asynchronous transfer mode cells.

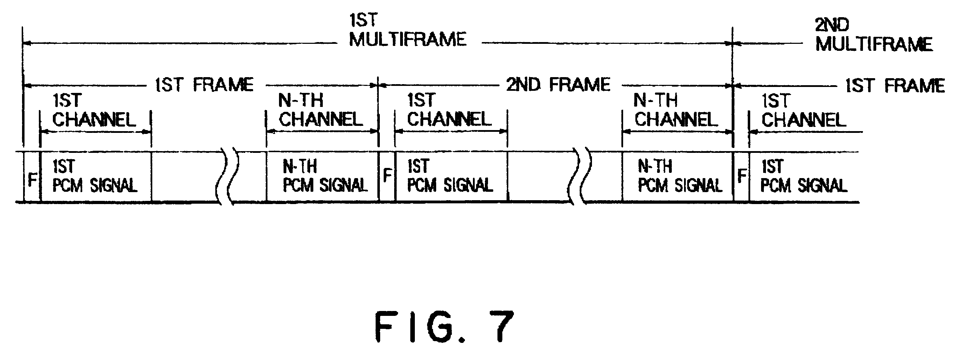

Turning to Fig. 7, the time division multiplexed signal comprises first through J-th multiframes, where J represents a predetermined plural and natural number. Each multiframe comprises a predetermined plural number K of frames. In the illustrated example, K is equal to 2. Therefore, each multiframe comprises first and second frames. Each of the frames is similar in structure to each frame illustrated in Fig. 2.

In Fig. 4, the extracting unit 21 successively extracts the frame synchronization signals F (Fig. 7) of the frames of a j-th multiframe from the time division multiplexed signal as extracted synchronization signals and successively extracts, on the basis of the extracted synchronization signals, the first through the N-th pulse code modulated (PCM) signals of the frames of the j-th multiframe from the time division multiplexed signal as first through N-th extracted signals of the frames of the j-th multiframe, where j consecutively varies from 1 to J.

The building unit 23 successively builds first through J-th cells as the asynchronous transfer mode cells so that an information field of a j-th cell of the first through the J-th cells comprises the first through the N-th extracted signals of the frames of the j-th multiframe.

Thus, the building unit 23 builds the asynchronous transfer mode cells which are equal to J (that is, the number of the multiframes).

It will be assumed that the information field of each of the first through the J-th cells comprises first through (K x N)-th bytes. In this event, the building unit 23 successively builds the first through the J-th cells so that the first through the N-th extracted signals of the frames of the j-th multiframe are placed in the first through the (K x N)-th bytes of the information field of the j-th cell, respectively.

When the information field of each of the first through the J-th cells further comprises a prescribed number Q of remaining bytes, empty bytes are placed in the remaining bytes of the information field of the j-th cell by the building unit 23 in the manner similar to the method according to the first embodiment of this invention.

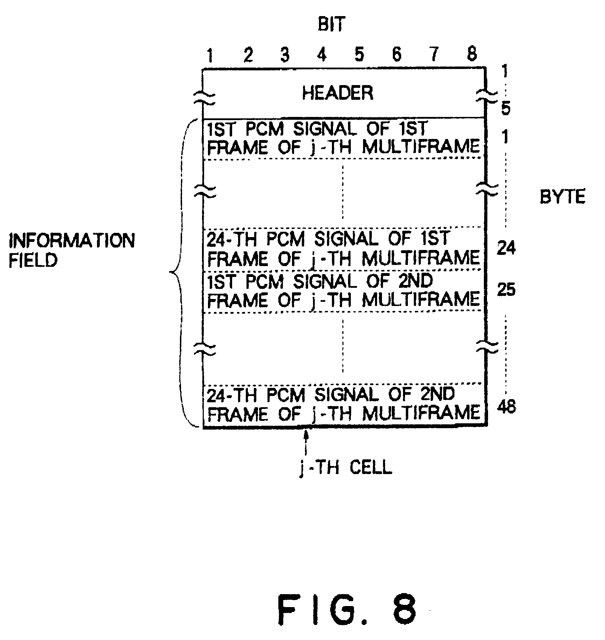

Turning to Fig. 8, the j-th cell of the first through the J-th cells is illustrated, which j-th cell is produced by the method according to the second embodiment of this invention when the number K of the frames of each multiframe is equal to 2 and when the number N of the speech channels is equal to 24. Like the m-th cell of Fig. 5, the illustrated j-th cell comprises the reader of five bytes and the information field comprising first through forty-eighth bytes. In other words, the information field of the j-th cell comprises the first through the (J x N)-th (that is, forty-eighth) bytes. The first through the N-th extracted signals (which are equivalent to the first through the N-th pulse code modulated (PCM) signals) of the first and the second frames of the j-th multiframe are placed in the first through the (J x N)-th (forty-eighth) bytes of the information field of the j-th cell, respectively.

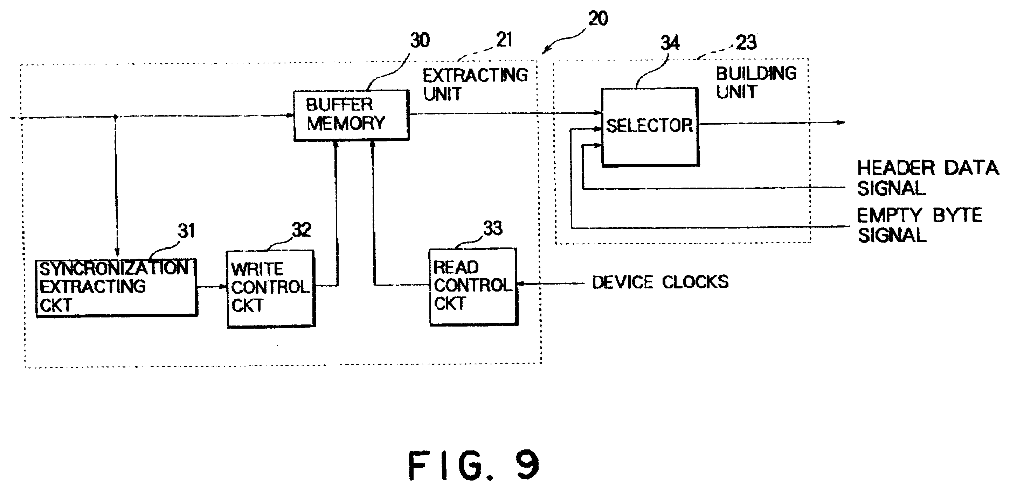

Turning to Fig. 9, description will proceed to details of the extracting and the building units 21 and 23 of the processing device 20 illustrated in Fig. 4. The extracting unit 21 comprises a buffer memory 30 having a memory capacity capable of memorizing or keeping either at least one frame of the time division multiplexed signal of Fig. 2 or at least one multiframe of the time division multiplexed signal of Fig. 7. A synchronization extracting circuit 31 extracts the frame synchronization signal F (Figs. 2 and 7) of each frame from the time division multiplexed signal as the extracted synchronization signal and extracts received clocks from the time division multiplexed signal as extracted clocks. On the basis of the extracted synchronization signal and the extracted clocks, a write controller 32 controls writing of either each frame of the time division multiplexed signal of Fig. 2 or each multiframe of the time division multiplexed signal of Fig. 7 in the buffer memory 30. A read controller 33 controls reading of either the first through the N-th pulse code modulated signals of each frame or the first through the N-th pulse code modulated signals of the frames of each multiframe from the buffer memory 30 on the basis of device clocks of the processing device 20.

The building unit 23 comprised a selector 34 connected to the buffer memory 30 and supplied with an empty bite signal representative of the empty bite and with header data signal representative of header data which should be included in the header of each asynchronous transfer mode cell and which comprises a destination address of each asynchronous transfer mode cell. The selector 34 selects one of an output signal of the buffer memory 30, the empty bite signal, and the header data signal as a selected signal at a time so that the selected signal constitutes either the m-th cell of each of Figs. 5 and 6 or the j-th cell of Fig. 8.

## Claims

1. A method of processing a time division multiplexed signal into asynchronous transfer mode cells, each comprising an information field, said time division multiplexed signal comprising first through M-th frames, each comprising first through N-th pulse code modulated signals, where M represents a first predetermined plural and natural number, N representing a second predetermined plural and natural number, said method comprising the steps of:
successively extracting said first through said N-th pulse code modulated signals of an m-th frame from said time division multiplexed signal as first through N-th extracted signals of said m-th frame, where m consecutively varies from 1 to M; and
successively building first through M-th cells as said asynchronous transfer mode cells so that the information field of an m-th cell of said first through said M-th cells comprises the first through the N-th extracted signals of said m-th frame.

2. A method as claimed in Claim 1, the information field of each of said first through said M-th cells comprising first through N-th bytes, wherein said building step is for successively building said first through said M-th cells so that the first through the N-th extracted signals of said m-th frame are placed in said first through said N-th bytes of the information field of said m-th cell, respectively.

3. A method as claimed in Claim 1, the information field of each of said first through said M-th cells comprising first through N-th bytes and a prescribed number Q of remaining bytes, wherein said building step is for successively building said first through said M-th cells so that said first through said N-th extracted signals of the information field of said m-th frame are placed in the first through the N-th bytes of said m-th cell, respectively, and that empty bytes are placed in said remaining bytes of the information field of said m-th cell.

4. A method of processing a time division multiplexed signal into asynchronous transfer mode cells, each comprising an information field, said time division multiplexed signal comprising first through J-th multiframes, where J represents a predetermined plural and natural number, each multiframe comprising a predetermined plural number K of frames, each of said frames comprising first through N-th pulse code modulated signals, where N represents another predetermined plural and natural number, said method comprising the steps of:
successively extracting the first through the N-th pulse code modulated signals of the frames of a j-th multiframe from said time division multiplexed signal as first through N-th extracted signals of the frames of said j-th multiframe, where j consecutively varies from 1 to J; and
successively building first through J-th cells as said asynchronous transfer mode cells so that the information field of a j-th cell of said first through said J-th cells comprises said first through said N-th extracted signals of the frames of said j-th multiframe.

5. A method as claimed in Claim 4, the information field of each of said first through said J-th cells comprising first through (K x N)-th bytes, wherein said building step is for successively building said first through said J-th cells so that said first through said N-th extracted signals of the frames of said j-th multiframe are placed in said first through said (K x N)-th bytes of the information field of said j-th cell, respectively.

6. A method as claimed in Claim 4, the information field of each of said first through said J-th calls comprising first through (K x N)-th bytes and a prescribed number Q of remaining bytes, wherein said building step is for successively building said first through said J-th cells so that said first through said N-th extracted signals of the frames of said j-th multiframe are placed in said first through said (K x N)-th bytes of the information field of said j-th cell, respectively, and that empty bytes are placed in said remaining bytes of the information field of said j-th cell.

7. A device for processing a time division multiplexed signal into asynchronous transfer mode cells, each comprising an information field, said time division multiplexed signal comprising first through M-th frames, each comprising first through N-th pulse code modulated signals, where M represents a first predetermined plural and natural number, N representing a second predetermined plural and natural number, said device comprising:
an extracting unit for successively extracting said first through said N-th pulse code modulated signals of an m-th frame from said time division multiplexed signal as first through N-th extracted signals of said m-th frame, where m consecutively varies from 1 to M; and
a building unit connected to said extracting unit for successively building first through M-th cells as said asynchronous transfer mode cells so that the information field of an m-th cell of said first through said M-th cells comprises the first through the N-th extracted signals of said m-th frame.

8. A device as claimed in Claim 7, the information field of each of said first through said M-th cells comprising first through N-th bytes, wherein said building unit is for successively building said first through said M-th cells so that the first through the N-th extracted signals of said m-th frame are placed in said first through said N-th bytes of the information field of said m-th cell, respectively,

9. A device as claimed in Claim 7, the information field of each of said first through said M-th cells comprising first through N-th bytes and a prescribed number Q of remaining bytes, wherein said building unit is for successively building said first through said M-th cells so that the first through the N-th extracted signals of said m-th frame are placed in said first through said N-th bytes of the information field of said m-th cell, respectively, and that empty bytes are placed in said remaining bytes of the information field of said m-th cell.

10. A device for processing a time division multiplexed signal into asynchronous transfer mode cells, each comprising an information field, said time division multiplexed signal comprising first through J-th multiframes, where J represents a predetermined plural and natural number, each multiframe comprising a predetermined plural number X of frames, each of said frames comprising first through N-th pulse code modulated signals, where N represents another predetermined plural and natural number, said device comprising:
an extracting unit for successively extracting the first through the N-th pulse code modulated signals of the frames of a j-th multiframe from said time division multiplexed signal as first through N-th extracted signals of the frames of said j-th multiframe, where j consecutively varies from 1 to J; and
a building unit connected to said extracting unit for successively building first through J-th cells as said asynchronous transfer mode cells so that the information field of a j-th cell of said first through said J-th cells comprises said first through said N-th extracted signals of the frames of said j-th multiframe.

11. A device as claimed in Claim 10, the information field of each of said first through said J-th cells comprising first through (K x N)-th bytes, wherein said building unit is for successively building said first through said J-th cells so that said first through said N-th extracted signals of the frames of said j-th multiframe are placed in said first through said (K x N)-th bytes of the information field of said j-th cell, respectively.

12. A device as claimed in Claim 10, the information field of each of said first through said J-th cells comprising first through (K x N)-th bytes and a prescribed number Q of remaining bytes wherein said building unit is for successively building said first through said J-th cells so that said first through said N-th extracted signals of the frames of said j-th multiframe are placed in said first through said (K x N)-th bytes of the information field of said j-th cell, respectively, and that empty bytes are placed in said remaining bytes of the information field of said j-th cell.
